# EUROPEAN PATENT SPECIFICATION

(11) **EP 3 822 744 B1**
(45) Date of publication and mention of the grant of the patent: **11.09.2024**
(21) Application number: 19845399.5
(22) Date of filing: 27.07.2019
(51) Int. Cl.: G06F 3/033, G06F 3/0488, G06F 3/0354, G06F 3/0481, G06F 3/038, G06F 3/04883, G06F 3/041

(54) **TOUCH DEVICE AND METHOD**
BERÜHRUNGSVORRICHTUNG UND VERFAHREN
DISPOSITIF ET PROCÉDÉ TACTILES

(30) Priority: 03.08.2018 CN 201810876398
(43) Date of publication of application: 19.05.2021
(73) Proprietor: HUAWEI TECHNOLOGIES CO., LTD., Shenzhen, Guangdong 518129 (CN)
(72) Inventor: JIANG, Fangrong, Shenzhen, Guangdong 518129 (CN); ZAN, Chao, Shenzhen, Guangdong 518129 (CN)
(74) Representative: Maiwald GmbH
(86) International application number: PCT/CN2019/098060
(87) International publication number: WO 2020/024890

(56) References cited:
- CN-A- 1 521 587
- CN-A- 1 521 587
- CN-A- 104 750 473
- CN-Y- 201 364 559
- KR-A- 20150 111 701
- KR-A- 20170 007 051
- US-A1- 2011 012 849
- US-A1- 2017 322 762
- US-A1- 2021 026 462

## Description

This application claims priority to Chinese Patent Application CN 110794976 A, filed with the China National Intellectual Property Administration on August 3, 2018 and entitled "TOUCH CONTROL APPARATUS AND METHOD".

### TECHNICAL FIELD

This application relates to the communications field, and in particular, to a touch control apparatus and method.

### BACKGROUND

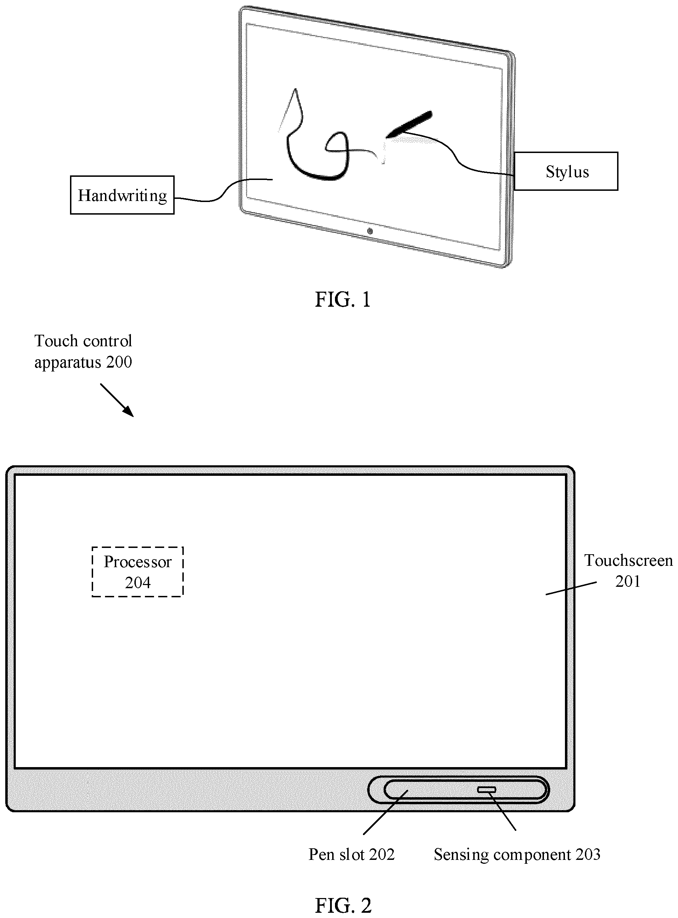

With rapid development of the internet and communications technologies, office informatization has become an important part of an entire IT service system. An interactive touch-control display device (for example, an interactive electronic whiteboard) that is closest to a user is prevalent, and has become a standard accessory for a digital conference. To achieve better writing experience, an interactive touch control display device is usually equipped with a stylus, helping the user write on a screen, as shown in FIG. 1.

However, when implementing a touch-control and writing function, an existing interactive touch-control display device can only start a dedicated writing program and write in the writing program, and cannot implement the touch-control and writing function in an interface other than the writing program. For example, when a PPT slide is displayed, the user further wants to perform touch-control and writing operations such as writing comments or circling and modifying in a playing interface of the slide, but this cannot be implemented in a prior art.
As an example, Korean patent application KR 2017 0007051 A discloses an electronic device including a display unit, an electronic pen, a pen sensing module, a pen input module, and a processor. The processor can activate the pen input module while maintaining the off state of the display unit if the detachment of the electronic pen is sensed in the off state of the display unit.
As another example, United States patent application US 2011/0012849 A1 discloses a method and an apparatus for controlling an electronic device having a removable stylus for operating a touch screen of an electronic device.
As yet another example, United States patent application US 2017/0322762 A1 discloses a method for providing a collaboration session using a designated control pen.
As yet another example, Korean patent application KR 2015 0111701 A discloses a terminal device with an input device, a sensor unit for sensing whether the input device is mounted or not, and a control unit for controlling an input unit and an output unit to be activated when it is sensed that the input device is separated from the mounting unit.
As yet another example, Chinese patent application CN 104750473 A discloses a writing superposition method for a touch screen, including setting an interface background of a writing program to be fully transparent.

### SUMMARY

Embodiments of this application provide a touch control apparatus that can eliminate a prior-art limitation that a touch-control and writing operation can be performed only when a button is first tapped to activate a dedicated writing program. The invention is as set out in the independent claims 1 and 4, preferred forms being set out in the dependent claims 2, 3, 5 and 6.

According to a first aspect, a touch control apparatus is provided, including a touchscreen, a processor, and a pen slot configured to place a stylus, where a sensing component is disposed in the pen slot, and the sensing component is configured to: detect that the stylus placed in the pen slot is picked up, and generate a signal; the processor is configured to control, based on the signal generated by the sensing component, the touchscreen to superimpose and display a writing interface on a current interface; and the touchscreen is configured to display the writing interface on the current interface, and is further configured to: receive touch control of the stylus, and display, on the writing interface, a path generated by the touch control of the stylus.

That the stylus is picked up usually means that a user is about to write. The touch control apparatus in the embodiments of this application can identify a user's intention, and display the writing interface on the current interface when the stylus is picked up, to implement an objective that the user can write when picking up the stylus.

According to the first aspect, the writing interface has a background color or a transparent color.

According to the first aspect, the writing interface has the background color when the touch control apparatus is in a standby state.

According to the first aspect, the writing interface has the transparent color when the touchscreen displays at least one of an interface corresponding to presentation data, an operation interface of an application program, and a system desktop.

When the writing interface has the background color, an interface before the writing interface is displayed may be blocked, to avoid an impact of previous interface content on handwriting. When the writing interface has the transparent color, an interface before the writing interface is displayed may be seen during writing, to facilitate presentation of the previous interface. For example, the interface before the writing interface is displayed is an office software interface.

With reference to the first aspect, in a first possible implementation, the touchscreen is further configured to display a control button, and the processor is further configured to detect a position at which the stylus starts to touch the writing interface; and when the position is in a sensing area of the control button, the touchscreen is further configured to display an interface for performing an operation corresponding to the control button, or when the position is in an area other than the sensing area of the control button, the touchscreen is further configured to display a writing path generated by the touch control.

With reference to any one of the first aspect, or the first possible implementation of the first aspect, in a second possible implementation, a magnet or a fastener is disposed in the pen slot, and the stylus is fastened to the pen slot by using the magnet or the fastener.

According to a second aspect, a touch control method is provided, including: detecting, by a touch control apparatus by using a sensing component disposed in a pen slot of the touch control apparatus, that a stylus placed in the pen slot is picked up, where the stylus is picked up to trigger the touch control apparatus to superimpose and display a writing interface on a current interface; superimposing and displaying, by the touch control apparatus by using a touchscreen of the touch control apparatus, the writing interface on the current interface; receiving, by the touch control apparatus by using the touchscreen, touch control of the stylus; and displaying, by the touch control apparatus on the writing interface, a path generated by the touch control. According to the second aspect, the writing interface has a background color or a transparent color.

According to the second aspect, the writing interface has the background color when the touch control apparatus is in a standby state.

According to the second aspect, the writing interface has the transparent color when the touchscreen displays at least one of an interface corresponding to presentation data, an operation interface of an application program, and a system desktop.

With reference to the second aspect, in a first possible implementation, the touch control apparatus further displays a control button on the touchscreen. The touch control apparatus also detects a position at which the stylus starts to touch the writing interface. When the position is in a sensing area of the control button, the touch control apparatus displays, on the touchscreen, an interface for performing an operation corresponding to the control button, or when the position is in an area other than the sensing area of the control button, the touch control apparatus displays, on the touchscreen, a writing path generated by the touch control.

With reference to any one of: the second aspect or the first possible implementation of the second aspect, in a second possible implementation, the touch control apparatus fastens the stylus to the pen slot by using a magnet or a fastener disposed in the pen slot.

According to the technical solutions provided in the embodiments of this application, the sensing component disposed in the pen slot of the touch control apparatus detects that the stylus is picked up, so that the processor is triggered to control the touchscreen to superimpose and display the writing interface on the current interface. Therefore, the stylus can perform the touch-control and writing operation on the writing interface, and this resolves a problem that the touch-control and writing operation can be performed only when a button is first tapped to activate the dedicated writing program.

### BRIEF DESCRIPTION OF DRAWINGS

To describe the technical solutions in the embodiments of this application or in a prior art more clearly, the following briefly describes the accompanying drawings required for describing the embodiments or the prior art.
FIG. 1 is a schematic diagram of writing on a screen by using a stylus in a prior art of this application;
FIG. 2 is a schematic structural diagram of a touch control apparatus according to an embodiment of this application;
FIG. 3 is a schematic diagram of a stylus placed in a pen slot according to an embodiment of this application;
FIG. 4 is a schematic structural diagram of a pen slot according to an embodiment of this application;
FIG. 5 is a schematic diagram of a writing interface having a background color according to an embodiment of this application;
FIG. 6 is a schematic diagram of a writing interface having a transparent color according to an embodiment of this application;
FIG. 7 is a schematic diagram of displaying an interface for performing an operation corresponding to a control button according to an embodiment of this application;
FIG. 8 is a schematic diagram of displaying a path generated by touch control of a stylus according to an embodiment of this application;
FIG. 9 is a schematic structural diagram of a touch control apparatus according to an embodiment of this application; and
FIG. 10 is an example of a flowchart of a touch control method 700 according to an embodiment of this application.

### DESCRIPTION OF EMBODIMENTS

In the embodiments of this application, a touchscreen is also referred to as a touch panel, and is an induction liquid crystal display apparatus or a tablet display apparatus that can receive an input signal such as a contact (for example, a stylus or a finger). The stylus is a pen-shaped tool, and is configured to input an instruction to a device having a touchscreen, such as a computer screen, a mobile device, or a drawingboard. A user may select a file or perform drawing by tapping the touchscreen by using the stylus. Presentation data includes a to-be-displayed or to-be-operated file that is obtained by a conference terminal from an external device.

The following describes the embodiments of this application with reference to the accompanying drawings.

FIG. 2 is a schematic structural diagram of a touch control apparatus according to an embodiment of this application. In FIG. 2, the touch control apparatus 200 includes a touchscreen 201 and a pen slot 202. The pen slot 202 is configured to place a stylus. The pen slot 202 is a position for placing the stylus, for example, a dent, or the like, adapted to the stylus. A sensing component 203 is disposed in the pen slot 202. The sensing component 203 may be a sensor, such as a photoelectric sensor, and may be specifically an infrared light reflective sensor. The sensing component 203 may alternatively be an electromagnetic sensor or a touch switch. The touch control apparatus 200 further includes a processor 204. Because a processor is usually encapsulated inside a product and is invisible from outside, the processor 204 in the figure is represented by a dashed line. Although only one processor is shown in the figure, a person skilled in the art may understand that the touch control apparatus 200 may include a plurality of processors.

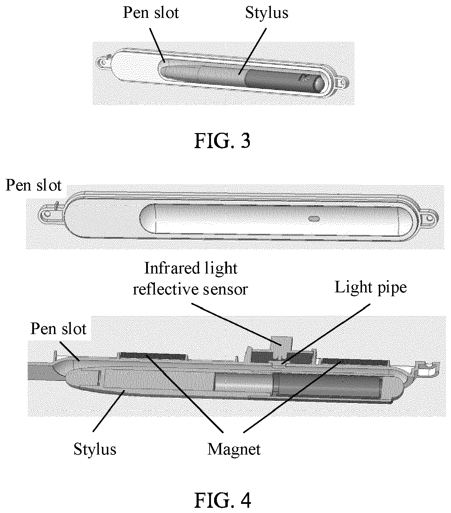

When the stylus is not used, the stylus is usually placed in the pen slot 202. A magnet or a fastener may be disposed in the pen slot 202, so that the stylus is fastened to the pen slot 202, as shown in FIG. 3. FIG. 4 is a schematic structural diagram of a pen slot according to an embodiment of this application. In FIG. 4, a magnet and an infrared light reflective sensor are disposed in the pen slot, and a stylus is attached to the pen slot by using the magnet.

The sensing component 203 is configured to detect whether the stylus in the pen slot 202 is picked up, namely, whether the stylus leaves the pen slot 202. The sensing component 203 is further configured to generate a signal to trigger the processor 204 to control the touchscreen 201 to superimpose and display a writing interface on a current interface. For the photoelectric sensor, when the stylus is picked up from the pen slot or placed into the pen slot, light intensity received by the photoelectric sensor changes, so that whether the stylus is placed in the pen slot can be detected. The change in the light intensity causes a voltage change. The voltage change is parsed into a level signal of "0" or "1" (generally "0" is a low level, and "1" is a high level), and the signal triggers the processor 204 to control background software to start or not to start the writing interface. For the electromagnetic sensor, when the stylus with a built-in magnet is picked up from the pen slot or placed into the pen slot, magnetic field strength changes, so that whether the stylus is placed in the pen slot can be detected. The change in the magnetic field strength causes a voltage change. Similar to the photoelectric sensor, the voltage change triggers the processor 204 to control the background software to start or not to start the writing interface. For the touch switch, when the stylus is picked up from the pen slot or placed into the pen slot, the touch switch pops up or is pressed down, to detect whether the stylus is placed in the pen slot. The touch switch pops up or is pressed down to cause a voltage change. Similarly, the voltage change triggers the processor 204 to control the background software to start or not to start the writing interface. That the processor 204 controls the touchscreen 201 to superimpose and display a writing interface on a current interface includes superimposing a touch feature on the current interface. After the writing interface is superimposed and displayed, writing operations may be performed on the current interface by using the stylus. The writing operations include operations such as writing and drawing.

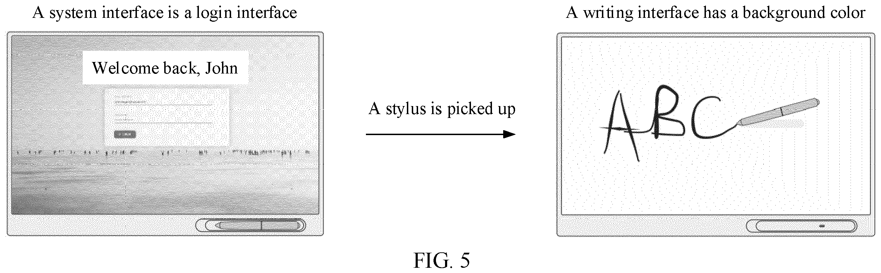

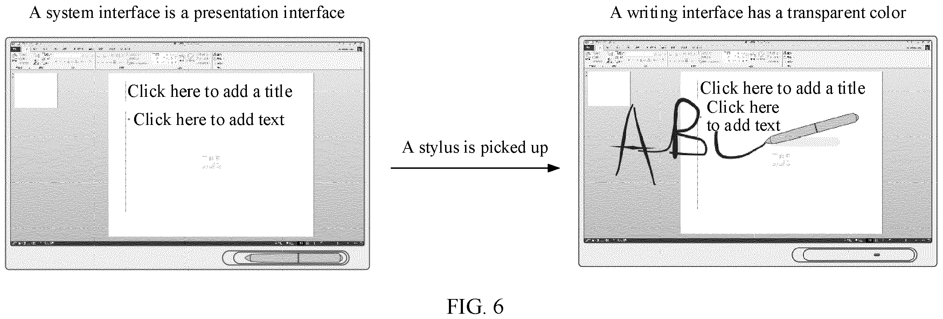

The processor 204 may control the touchscreen 201 to display a system interface such as a system desktop, an operation interface of an application program, and an interface (for example, a PPT slide) corresponding to presentation data in a conference. The processor 204 may further control the touchscreen to superimpose and display the writing interface on the currently displayed interface, and display, on the writing interface, a path generated by touch control of the stylus. The writing interface may have a background color or a transparent color. When the writing interface has the background color, a system interface before the writing interface is displayed is blocked by the writing interface, as shown in FIG. 5. When the writing interface has the transparent color, a system interface before the writing interface is displayed may be seen through the writing interface, as shown in FIG. 6.

In an embodiment, when the touch control apparatus 200 is in a standby state, the writing interface has the background color; and when the touchscreen 201 displays at least one of the interface corresponding to the presentation data, the operation interface of the application program, or the system desktop, the writing interface has the transparent color.

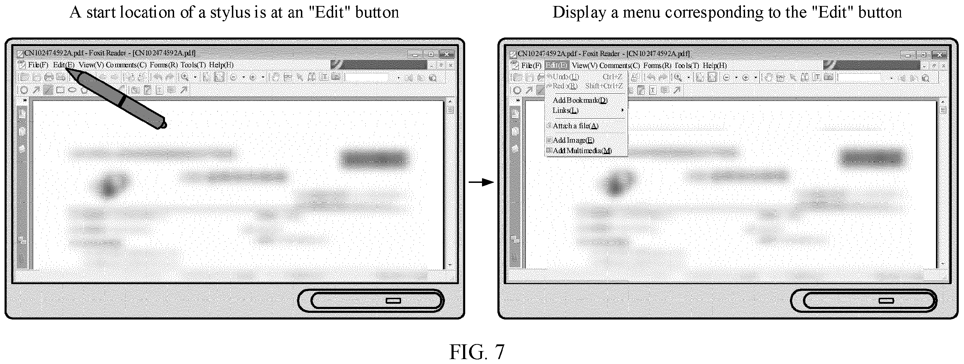

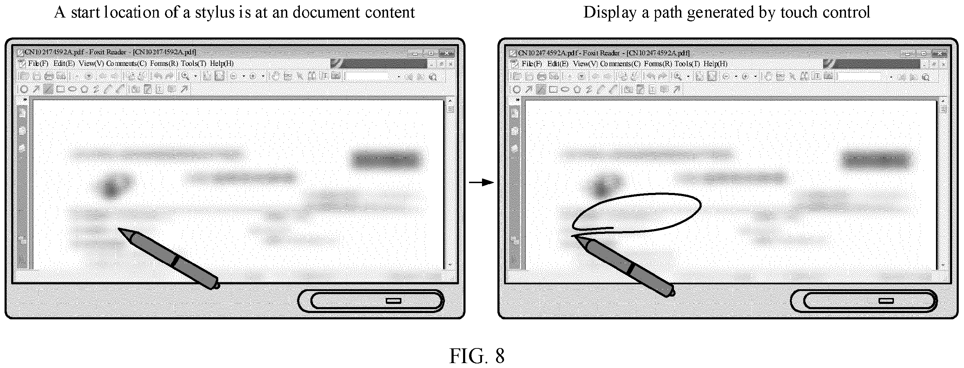

The touchscreen 201 is further configured to display a control button. An operation interface of an application program and a system desktop usually have a plurality of control buttons, for example, a "start" button and an "insert" button on a toolbar in office software Word, and an application icon on a desktop. Therefore, the processor 204 is further configured to detect a position at which the stylus starts to touch the writing interface. When the position is in a sensing area of the control button, the processor 204 controls the touchscreen 201 to display an interface for performing an operation corresponding to the control button. Because in this case, a user using the stylus is more likely to want to tap the control button instead of writing. As shown in FIG. 7, an interface currently displayed on a touchscreen is an office software interface, and buttons such as "File" and "Edit" are displayed on the interface. A position at which a stylus starts to touch the touchscreen is the "edit" button, and a user's intention is usually to tap the "edit" button. In this case, a processor controls the touchscreen to display an interface of a menu corresponding to the "edit" button. When the position is in an area other than the sensing area of the control button, the processor 204 controls the touchscreen 201 to display the path generated by the touch control of the stylus. Because in this case, a user using the stylus is more likely to want to write. As shown in FIG. 8, a position at which a stylus starts to touch a touchscreen is document content, and a user's intention is usually to write. In this case, a processor controls the touchscreen to display a path generated by touch control of the stylus. The path generated by the touch control of the stylus may also be referred to as handwriting.

According to the technical solutions provided in the embodiments of this application, the sensing component disposed in the pen slot of the touch control apparatus detects that the stylus is picked up, so that the processor is triggered to control the touchscreen to superimpose and display the writing interface on the current interface. Therefore, the stylus can perform a touch-control and writing operation on the writing interface, and this resolves a problem that the touch-control and writing operation can be performed only when a button is first tapped to activate a dedicated writing program.

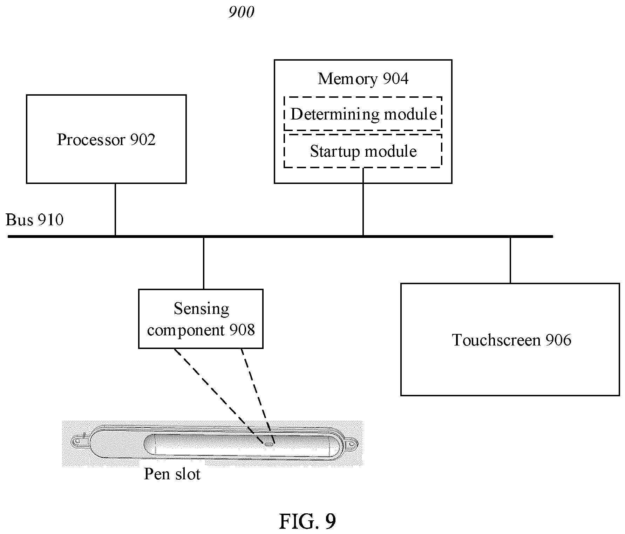

FIG. 9 is a schematic structural diagram of a touch control apparatus 900 according to an embodiment of this application. As shown in FIG. 9, the touch control apparatus 900 includes a processor 902, a memory 904, a touchscreen 906, a sensing component 908, and a bus 910. Mutual communicative connections between the processor 902, the memory 904, the touchscreen 906, and the sensing component 908 are implemented by using the bus 910.

The processor 902 may be a general-purpose central processing unit (CPU), a microprocessor, an application-specific integrated circuit (ASIC), or one or more integrated circuits, and is configured to execute a related program, to implement the technical solutions provided in the embodiments of this application.

The memory 904 may be a read-only memory (ROM), a static storage device, a dynamic storage device, or a random access memory (Random Access Memory, RAM). The memory 904 may store an operating system and another application program. When the technical solutions provided in the embodiments of this application are implemented by using software or firmware, program code used for implementing the technical solutions provided in the embodiments of this application is stored in the memory 904, and is executed by the processor 902.

For descriptions of the touchscreen 906 and the sensing component 908, refer to the embodiments in FIG. 2 to FIG. 8. Details are not described herein again.

The bus 910 may include a path for transmitting information between components (for example, the processor 902, the memory 904, the touchscreen 906, and the sensing component 908).

When the sensing component 908 detects that a stylus is picked up or placed back in a pen slot, a generated signal is transmitted to the processor 902 by using the bus 910. The processor 902 executes the program code in the memory 904, to display or not display a writing interface on the touchscreen 906. In this embodiment of this application, the program code in the memory 904 may include a determining module and a startup module. The determining module is configured to determine whether the signal generated by the sensing component 908 is used to start the writing interface, and the startup module is configured to start or not start to display the writing interface based on a determining result of the determining module.

According to the technical solutions provided in this embodiment of this application, the sensing component disposed in the pen slot of the touch control apparatus detects that the stylus is picked up, so that the touchscreen is triggered superimposing and displaying the writing interface on a current interface. Therefore, the stylus can perform a touch-control and writing operation on the writing interface, and this resolves a problem that the touch-control and writing operation can be performed only when a button is first tapped to activate a dedicated writing program.

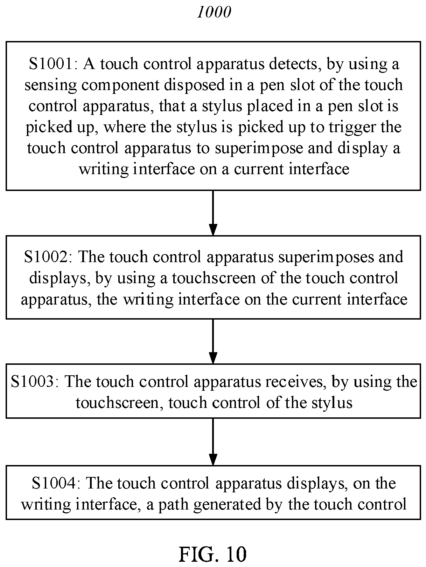

FIG. 10 is an example of a flowchart of a touch control method 1000 according to an embodiment of this application. The touch control method 1000 is performed by a touch control apparatus. The touch control apparatus may be the touch control apparatus 200 in the embodiment in FIG. 2, or may be the touch control apparatus 900 in the embodiment in FIG. 9. The touch control apparatus may be specifically a device having a touch function, such as a mobile terminal, a tablet computer, or an electronic whiteboard.

S1001: The touch control apparatus detects, by using a sensing component disposed in a pen slot of the touch control apparatus, that a stylus placed in the pen slot is picked up, where the stylus is picked up to trigger the touch control apparatus to superimpose and display a writing interface on a current interface.

S1002: The touch control apparatus superimposes and displays, by using a touchscreen of the touch control apparatus, the writing interface on the current interface.

Before a user picks up the stylus to write, the touchscreen of the touch control apparatus may be displaying a system interface (as described above) such as an operation interface of an application program, for example, an operation interface of office software Word. In this case, if the user wants to use the stylus to write, the user picks up the stylus from the pen slot. When the stylus is picked up, a sensor generates a signal, and the signal triggers background software to start the writing interface, where the writing interface is superimposed on the operation interface of the Word.

For descriptions of the sensing component, refer to the embodiments in FIG. 2 to FIG. 6. Details are not described herein again.

S1003: The touch control apparatus receives, by using the touchscreen, touch control of the stylus.

S1004: The touch control apparatus displays, on the writing interface, a path generated by the touch control.

The user writes on the touchscreen by using the stylus, and the path generated by the touch control of the stylus is displayed on the writing interface.

For descriptions of the writing interface, refer to the embodiments in FIG. 2 to FIG. 6. Details are not described herein again.

According to the technical solutions provided in this embodiment of this application, the sensing component disposed in the pen slot of the touch control apparatus detects that the stylus is picked up, so that the touchscreen is triggered superimposing and displaying the writing interface on the current interface. Therefore, the stylus can perform a touch-control and writing operation on the writing interface, and this resolves a problem that the touch-control and writing operation can be performed only when a button is first tapped to activate a dedicated writing program.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A touch control apparatus (200; 900) comprising a touchscreen (201; 906), a processor (204; 902), and a pen slot (202) configured to place a stylus, wherein
a sensing component (203; 908) is disposed in the pen slot (202), and the sensing component (203; 908) is configured to: detect that the stylus placed in the pen slot (202) is picked up, and generate a signal;
the processor (204; 902) is configured to control, based on the signal, the touchscreen (201; 906) to superimpose and display a writing interface on a current interface;
the writing interface has a background color or a transparent color;
the touchscreen (201; 906) is configured to display the writing interface on the current interface; and
the touchscreen (201; 906) is further configured to: receive touch control of the stylus, and
display, on the writing interface, a path generated by the touch control,
**characterized in that**
the writing interface has the background color when the touch control apparatus (200; 900) is in a standby state;
the writing interface has the transparent color when the touchscreen (201; 906) displays at least one of an interface corresponding to presentation data, an operation interface of an application program, and a system desktop.

2. The apparatus according to claim 1, wherein the touchscreen (201; 906) is further configured to display a control button, and the processor (204; 902) is further configured to detect a position at which the stylus starts to touch the writing interface; and
when the position is in a sensing area of the control button, the touchscreen (201; 906) is further configured to display an interface for performing an operation corresponding to the control button, or
when the position is in an area other than the sensing area of the control button, the touchscreen (201; 906) is further configured to display a writing path generated by the touch control.

3. The apparatus according to claim 1 or 2, wherein a magnet or a fastener is disposed in the pen slot (202), and the stylus is fastened to the pen slot (202) by using the magnet or the fastener.

4. A touch control method, comprising:
detecting, by a touch control apparatus (200; 900) by using a sensing component (203; 908) disposed in a pen slot (202) of the touch control apparatus (200; 900), that a stylus placed in the pen slot (202) is picked up, wherein the stylus is picked up to trigger the touch control apparatus (200; 900) to superimpose and display a writing interface on a current interface, wherein the writing interface has a background color or a transparent color;
superimposing and displaying, by the touch control apparatus (200; 900) by using a touchscreen (201; 906) of the touch control apparatus (200; 900), the writing interface on the current interface;
receiving, by the touch control apparatus (200; 900) by using the touchscreen (201; 906), touch control of the stylus; and
displaying, by the touch control apparatus (200; 900) on the writing interface, a path generated by the touch control,
**characterized in that**
the writing interface has the background color when the touch control apparatus (200; 900) is in a standby state, and the writing interface has the transparent color when the touchscreen (201; 906) displays at least one of an interface corresponding to presentation data, an operation interface of an application program, and a system desktop.

5. The method according to claim 4, wherein the touch control apparatus (200; 900) further displays a control button on the touchscreen (201; 906); and the method further comprises:
detecting, by the touch control apparatus (200; 900), a position at which the stylus starts to touch the writing interface; and
when the position is in a sensing area of the control button, displaying, by the touch control apparatus (200; 900) on the touchscreen (201; 906), an interface for performing an operation corresponding to the control button, or
when the position is in an area other than the sensing area of the control button, displaying, by the touch control apparatus (200; 900) on the touchscreen (201; 906), a writing path generated by the touch control.

6. The method according to claim 4 or 5, wherein the touch control apparatus (200; 900) fastens the stylus to the pen slot (202) by using a magnet or a fastener disposed in the pen slot (202).

## Patentansprüche

1. Berührungs-Steuervorrichtung (200; 900), die einen Touchscreen (201; 906), einen Prozessor (204; 902) und eine Stifthalterung (202) umfasst, die ausgelegt ist zum Platzieren eines Stifts, wobei
in der Stifthalterung (202) eine sensorische Komponente (203; 908) angeordnet ist und die sensorische Komponente (203; 908) ausgelegt ist zum: Erkennen, dass der Stift in der Stifthalterung (202) platziert ist, und Erzeugen eines Signals;
der Prozessor (204; 902) ausgelegt ist zum Steuern des Touchscreens (201; 906) zum Überlagern und Anzeigen einer Schreibschnittstelle auf einer aktuellen Schnittstelle, basierend auf dem Signal;
die Schreibschnittstelle eine Hintergrundfarbe oder eine transparente Farbe aufweist, der Touchscreen (201; 906) ausgelegt ist zum Anzeigen der Schreibschnittstelle auf der aktuellen Schnittstelle, und
der Touchscreen (201; 906) ferner ausgelegt ist zum: Empfangen einer Berührungssteuerung des Stifts und
Anzeigen eines durch die Berührungssteuerung erzeugten Pfads auf der Schreibschnittstelle,
**dadurch gekennzeichnet, dass**
die Schreibschnittstelle die Hintergrundfarbe aufweist, wenn sich die Berührungs-Steuervorrichtung (200; 900) in einem Bereitschaftszustand befindet,
die Schreibschnittstelle die transparente Farbe aufweist, wenn der Touchscreen (201; 906) eine Präsentationsdaten entsprechende Schnittstelle und/oder eine Bedienungsschnittstelle eines Anwendungsprogramms und/oder ein System-Desktop anzeigt.

2. Vorrichtung nach Anspruch 1, wobei der Touchscreen (201; 906) ferner ausgelegt ist zum Anzeigen einer Steuertaste und der Prozessor (204; 902) ferner ausgelegt ist zum Erkennen einer Position, an der der Stift beginnt, die Schreibschnittstelle zu berühren, und
wenn sich die Position in einem sensorischen Bereich der Steuertaste befindet, der Touchscreen (201; 906) ferner ausgelegt ist zum Anzeigen einer Schnittstelle zum Ausführen einer der Steuertaste entsprechenden Operation oder
wenn sich die Position in einem anderen Bereich als dem sensorischen Bereich der Steuertaste befindet, der Touchscreen (201; 906) ferner ausgelegt ist zum Anzeigen eines durch die Berührungssteuerung erzeugten Schreibpfads.

3. Vorrichtung nach Anspruch 1 oder 2, wobei ein Magnet oder eine Befestigungsvorrichtung in der Stifthalterung (202) angeordnet ist und der Stift durch Verwendung des Magneten oder der Befestigungsvorrichtung an der Stifthalterung (202) befestigt wird.

4. Berührungs-Steuerverfahren, umfassend:
Erkennen, durch eine Berührungs-Steuervorrichtung (200; 900) durch Verwendung einer sensorischen Komponente (203; 908), die in einer Stifthalterung (202) der Berührungs-Steuervorrichtung (200; 900) angeordnet ist, dass ein in der Stifthalterung (202) platzierter Stift aufgenommen wird, wobei der Stift aufgenommen wird, um die Berührungs-Steuervorrichtung (200; 900) dazu zu veranlassen, eine Schreibschnittstelle auf einer aktuelle Schnittstelle zu überlagern und anzuzeigen, wobei die Schreibschnittstelle eine Hintergrundfarbe oder eine transparente Farbe aufweist,
Überlagern und Anzeigen der Schreibschnittstelle auf der aktuellen Schnittstelle durch die Berührungs-Steuervorrichtung (200; 900) durch Verwendung eines Touchscreens (201; 906) der Berührungs-Steuervorrichtung (200; 900);
Empfangen einer Berührungssteuerung des Stifts durch die Berührungs-Steuervorrichtung (200; 900) durch Verwendung des Touchscreens (201; 906); und Anzeigen eines durch die Berührungssteuerung erzeugten Pfads durch die Berührungs-Steuervorrichtung (200; 900) auf der Schreibschnittstelle,
**dadurch gekennzeichnet, dass**
die Schreibschnittstelle die Hintergrundfarbe aufweist, wenn sich die Berührungs-Steuervorrichtung (200; 900) in einem Bereitschaftszustand befindet,
und die Schreibschnittstelle die transparente Farbe aufweist, wenn der Touchscreen (201; 906) eine Präsentationsdaten entsprechende Schnittstelle und/oder eine Bedienungsschnittstelle eines Anwendungsprogramms und/oder ein System-Desktop anzeigt.

5. Verfahren nach Anspruch 4, wobei die Berührungs-Steuervorrichtung (200; 900) ferner eine Steuertaste auf dem Touchscreen (201; 906) anzeigt; und das Verfahren ferner Folgendes umfasst:
Erkennen einer Position, an der der Stift beginnt, die Schreibschnittstelle zu berühren, durch die Berührungs-Steuervorrichtung (200; 900); und
wenn sich die Position in einem sensorischen Bereich der Steuertaste befindet, Anzeigen einer Schnittstelle zum Ausführen einer der Steuertaste entsprechenden Operation, durch die Berührungs-Steuervorrichtung (200; 900) auf dem Touchscreen (201; 906) oder
wenn sich die Position in einem anderen Bereich als dem sensorischen Bereich der Steuertaste befindet, Anzeigen eines durch die Berührungssteuerung erzeugten Schreibpfads durch die Berührungs-Steuervorrichtung (200; 900) auf dem Touchscreen (201; 906).

6. Verfahren nach Anspruch 4 oder 5, wobei die Berührungs-Steuervorrichtung (200; 900) den Stift durch Verwendung eines Magneten oder einer Befestigungsvorrichtung, die in der Stifthalterung (202) angeordnet ist, an der Stifthalterung (202) befestigt.

## Revendications

1. Appareil de commande tactile (200 ; 900) comprenant un écran tactile (201 ; 906), un processeur (204 ; 902), et une fente pour stylo (202) configurée pour placer un stylet, dans lequel
un composant de détection (203 ; 908) est disposé dans la fente pour stylo (202), et le composant de détection (203 ; 908) est configuré pour : détecter que le stylet placé dans la fente pour stylo (202) est pris, et générer un signal ;
le processeur (204 ; 902) est configuré pour commander, sur la base du signal, l'écran tactile (201 ; 906) pour superposer et afficher une interface d'écriture sur une interface actuelle ;
l'interface d'écriture a une couleur d'arrière-plan ou une couleur transparente ;
l'écran tactile (201 ; 906) est configuré pour afficher l'interface d'écriture sur l'interface actuelle ; et
l'écran tactile (201 ; 906) est en outre configuré pour : recevoir une commande tactile du stylet, et afficher, sur l'interface d'écriture, un trajet généré par la commande tactile, **caractérisé en ce que**
l'interface d'écriture a la couleur d'arrière-plan lorsque l'appareil de commande tactile (200 ; 900) est dans un état d'attente ;
l'interface d'écriture a la couleur transparente lorsque l'écran tactile (201 ; 906) affiche au moins un parmi une interface correspondant à des données de présentation, une interface d'opération d'un programme d'application, et un bureau de système.

2. Appareil selon la revendication 1, dans lequel l'écran tactile (201 ; 906) est en outre configuré pour afficher un bouton de commande, et le processeur (204 ; 902) est en outre configuré pour détecter une position à laquelle le stylet commence à toucher l'interface d'écriture ; et
lorsque la position est dans une zone de détection du bouton de commande, l'écran tactile (201 ; 906) est en outre configuré pour afficher une interface pour réaliser une opération correspondant au bouton de commande, ou
lorsque la position est dans une zone autre que la zone de détection du bouton de commande, l'écran tactile (201 ; 906) est en outre configuré pour afficher un trajet d'écriture généré par la commande tactile.

3. Appareil selon la revendication 1 ou 2, dans lequel un aimant ou un dispositif de fixation est disposé dans la fente pour stylo (202), et le stylet est fixé à la fente pour stylo (202) en utilisant l'aimant ou le dispositif de fixation.

4. Procédé de commande tactile, comprenant :
la détection, par un appareil de commande tactile (200 ; 900), en utilisant un composant de détection (203 ; 908) disposé dans une fente pour stylo (202) de l'appareil de commande tactile (200 ; 900), qu'un stylet placé dans la fente pour stylo (202) est pris, dans lequel le stylet est pris pour entraîner le déclenchement de l'appareil de commande tactile (200 ; 900) pour superposer et afficher une interface d'écriture sur une interface actuelle, dans lequel l'interface d'écriture a une couleur d'arrière-plan ou une couleur transparente ;
la superposition et l'affichage, par l'appareil de commande tactile (200 ; 900), en utilisant un écran tactile (201 ; 906) de l'appareil de commande tactile (200 ; 900), de l'interface d'écriture sur l'interface actuelle ;
la réception, par l'appareil de commande tactile (200 ; 900), en utilisant l'écran tactile (201 ; 906), d'une commande tactile du stylet ; et
l'affichage, par l'appareil de commande tactile (200 ; 900), sur l'interface d'écriture, d'un trajet généré par la commande tactile,
**caractérisé en ce que**
l'interface d'écriture a la couleur d'arrière-plan lorsque l'appareil de commande tactile (200 ; 900) est dans un état d'attente, et l'interface d'écriture a la couleur transparente lorsque l'écran tactile (201 ; 906) affiche au moins un parmi une interface correspondant à des données de présentation, une interface d'opération d'un programme d'application, et un bureau de système.

5. Procédé selon la revendication 4, dans lequel l'appareil de commande tactile (200 ; 900) affiche en outre un bouton de commande sur l'écran tactile (201 ; 906) ; et le procédé comprend en outre :
la détection, par l'appareil de commande tactile (200 ; 900), d'une position à laquelle le stylet commence à toucher l'interface d'écriture ; et
lorsque la position est dans une zone de détection du bouton de commande, l'affichage, par l'appareil de commande tactile (200 ; 900), sur l'écran tactile (201 ; 906), d'une interface pour réaliser une opération correspondant au bouton de commande, ou
lorsque la position est dans une zone autre que la zone de détection du bouton de commande, l'affichage, par l'appareil de commande tactile (200 ; 900), sur l'écran tactile (201 ; 906), d'un trajet d'écriture généré par la commande tactile.

6. Procédé selon la revendication 4 ou 5, dans lequel l'appareil de commande tactile (200 ; 900) fixe le stylet à la fente pour stylo (202) en utilisant un aimant ou un dispositif de fixation disposé dans la fente pour stylo (202).
